**Europäisches Patentamt**

**European Patent Office**

**Office européen des brevets**

(11) Veröffentlichungsnummer: **0 203 346**
**B1**

## EUROPÄISCHE PATENTSCHRIFT

(45) Veröffentlichungstag der Patentschrift:
10.08.88

(51) Int. Cl.⁴: **B 60 T 8/84**

(21) Anmeldenummer: **86105348.6**

(22) Anmeldetag: **17.04.86**

(54) Lastkraftfahrzeug mit einem Doppelachsaggregat.

(30) Priorität: **22.05.85 DE 3518340**

(43) Veröffentlichungstag der Anmeldung:
**03.12.86 Patentblatt 86/49**

(45) Bekanntmachung des Hinweises auf die Patenterteilung:
**10.08.88 Patentblatt 88/32**

(84) Benannte Vertragsstaaten:
**DE FR GB SE**

(56) Entgegenhaltungen:
**EP-A-0 002 073**
**DE-A-3 138 834**
**DE-A-3 201 045**
**DE-A-3 400 566**

"Wabco Gesetzliche Vorschriften der EG und
StVZO", 16. Auflage, 31. Mai 1979, Wabco
Fahrzeugbremsen GmbH, Hannover, Seiten 30-31

(73) Patentinhaber: **ROBERT BOSCH GMBH, Postfach
50, D-7000 Stuttgart 1 (DE)**

(72) Erfinder: **Kopper, Werner, Dipl.- Ing., 8830 Skylane
Drive, Brighton Michigan (US)**
Erfinder: **Möller, Hubert, Dipl.- Ing., Bergheimer
Strasse 37, D-7000 Stuttgart 31 (DE)**
Erfinder: **Schramm, Herbert, Dr.- Ing., Im Götzen
25, D-7000 Stuttgart 1 (DE)**
Erfinder: **Wörner, Dieter, Blankensteinstrasse 5,
D-7127 Pleidelsheim (DE)**

## Beschreibung

Die Erfindung bezieht sich auf ein Lastkraftfahrzeug mit einem Doppelachsaggregat nach der Gattung des Patentanspruchs. Ein derartiges Lastkraftfahrzeug ist bekannt (DE-A-26 23 320).

Bei solchen Lastkraftfahrzeugen sind gewöhnlich alle Räder mit Drehzahl und/oder Beschleunigungssensoren versehen, und von den Sensoren angesteuerte Drucksteuerventile überwachen den Bremsdruck-Durchgang in Bremsleitungen, die von einem Bremsventil zu an den Rädern angeordneten Radbremszylindern führen, um die Räder vor einem Blockieren zu schützen. Es ist auch bereits bekannt, die Blockierüberwachung einzelner Achsen, insbesondere einer Achse eines Doppelachsaggregats des Fahrzeugs, zusammenzufassen, um Drucksteuerventile zu sparen.

Nun hat es sich aber in der Praxis herausgestellt, daß gerade bei Doppelachsaggregaten die Vor- oder Nachlaufachse nur einen geringen Beitrag zur Gesamt-Bremskraft leistet. Dies ist zu erklären durch die verhältnismäßig geringe Achsbelastung und die insbesondere beim Bremsen auftretende Achslastverlagerung Der Effekt wird oft noch verstärkt bei Verwendung eines automatisch lastabhängigen Bremskraftreglers.

Es ist deshalb die Aufgabe der Erfindung, ein Lastfahrzeug mit einem Doppelachsaggregat zu schaffen, bei dem auf den geringen Beitrag der Vor- oder Nachlaufachse zur Gesamtbremskraft zeitweise verzichtet wird zugunsten eines sicherheitstechnisch bedeutsameren Beitrags zur Richtungsstabilisierung des Fahrzeugs.

Diese Aufgabe wird gemäß der Erfindung bei einem gattungsgemässen Lastkraftfahrzeug durch die kennzeichnenden Merkmale des Patentanspruchs gelöst.

Damit wird eine verbesserte Richtungsstabilität erreicht.

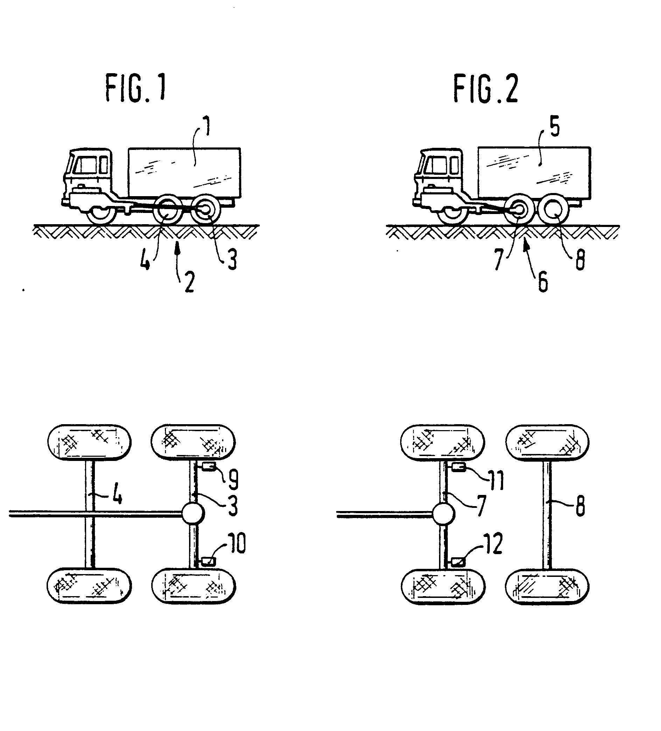

Zwei Ausführungsbeispiele der Erfindung sind in der Zeichnung dargestellt und in der nachfolgenden Beschreibung näher erläutert. Es zeigen: Figur 1 ein Fahrzeug mit Doppelachsaggregat mit Vorlaufachse und Figur 2 ein Fahrzeug mit Doppelachsaggregat mit Nachlaufachse.

Ein Lastkraftwagen 1 hat ein Doppelachsaggregat 2 mit einer Anriebsachse 3 und einer nicht angetriebenen Vorlaufachse 4, wie in der Figur 1 zu erkennen ist.

Die Figur 2 zeigt einen Lastwagen 5 mit einem Doppelachsaggregat 6 mit einer Antriebsachse 7 und einer nicht angetriebenen Nachlaufachse 8.

Beide Lastwagen 1 und 5 haben ein nicht näher dargestelltes Bremssystem mit einer Blockierschutzeinrichtung, von der nur jeweils die Radsensoren 9, 10 bzw. 11, 12 dargestellt sind.

Beim Betätigen der Bremsen werden alle Räder des Lastkraftfahrzeugs gebremst, auch die Vorlauf- bzw. Nachlaufachse 4 bzw. 8. Tritt Blockiergefahr auf, spricht die Blockierschutzeinrichtung an und verhindert, daß die Vorderräder und die Räder der Antriebsachse 3 bzw. 7 blockieren, indem der Bremsdruck zunächst vermindert und dann wieder allmählich, vorzugsweise in Stufen verstärkt wird.

Gleichzeitig wird beim Lastkraftfahrzeug 1 die Vorlaufachse 4 und beim Lastkraftfahrzeug 5 die Nachlaufachse 8 bei der Arbeit des Blockierschutzes auf Bremsdruck Null geschaltet. Damit wird dann die Vorlaufachse 4 bzw. die Nachlaufachse 8 völlig bremsdruckfrei gehalten. Dadurch wird die Richtungsstabilität des Lastkraftfahrzeuges wesentlich verbessert.

## Patentanspruch

Lastkraftfahrzeug mit einem Doppelachsaggregat, dessen eine Achse angetrieben wird und dessen andere Achse als Vor- oder Nachlaufachse ausgebildet ist, sowie mit einer Blockierschutzeinrichtung, dadurch gekennzeichnet, daß vom Doppelachsaggregat (2, 6) die Antriebsachse (3, 7) im Sinne einer Bremsdruckverminderung und anschließendem Bremsdruckwiederanstieg blockierüberwacht ist, die Vor- oder Nachlaufachse (4, 8) bei der Arbeit des Blockierschutzes jedoch auf Bremsdruck Null geschaltet wird.

## Claim

Tandem-axle truck, one axle of which is driven and the other axle of which is designed as a leading or trailing axle, and also having an anti-lock device, characterized in that, of the tandem axle assembly (2, 6), the drive axle (3, 7), for the purpose of reducing the brake pressure and then increasing it again, is monitored for locking, but the leading or trailing axle (4, 8), during the operation of the anti-lock system, is switched to zero brake pressure.

## Revendication

Camion à double essieu, dont un essieu est entraîné et dont l'autre essieu est conformé en essieu porteur avant ou arrière, ainsi qu'avec un dispositif de protection anti-blocage, caractérisé en ce que l'essieu moteur (3, 7) du train à double essieu (2, 6) est contrôlé contre tout blocage, dans le sens d'une diminution de la pression de freinage et d'un accroissement immédiatement consécutif de la pression de freinage et que l'essieu porteur avant ou arrière (4, 8) est toutefois raccordé à une pression de freinage nulle lors du fonctionnement de la protection anti-blocage.

# FIG.1

# FIG.2